# EUROPÄISCHE PATENTSCHRIFT

(11) **EP 1 923 574 B1**
(45) Veröffentlichungstag und Bekanntmachung des Hinweises auf die Patenterteilung: **29.10.2014**
(21) Anmeldenummer: 06024067.8
(22) Anmeldetag: 20.11.2006
(51) Int. Cl.: F04D 29/58, F01D 5/08

(54) **Verdichter, Turbinenanlage und Verfahren zum Zuführen von Heissluft**
Compressor, turbine and method for supplying heating gas
Compresseur, turbine et méthode d'alimentation de gaz chaud

(43) Veröffentlichungstag der Anmeldung: 21.05.2008
(73) Patentinhaber: Siemens Aktiengesellschaft, 80333 München (DE)
(72) Erfinder: Benkler, Francois, Dr., 40880 Ratingen (DE); Waltke, Ulrich, Dr., 45468 Mühlheim a. d. Ruhr (DE)

(56) Entgegenhaltungen:
- EP-A1- 0 894 946
- EP-A1- 1 503 061
- DE-A1- 4 411 616
- DE-A1- 10 122 695
- DE-A1- 19 839 592
- GB-A- 2 038 425
- US-A- 4 893 984

## Beschreibung

Die vorliegende Erfindung betrifft einen Verdichter mit einem Rotor, der eine Pluralität von Radscheiben aufweist, an denen Laufschaufeln befestigt sind, und einer Nabe, eine Turbinenanlage mit einem solchen Verdichter sowie ein Verfahren zum Zuführen von Luft.

Eine Turbinenanlage enthält üblicherweise einen Verdichter zum Verdichten von Luft, die einer Brennkammer zugeführt wird, wo sie anschließend mit einem Brennstoff zusammengebracht und verbrannt wird. Das aus der Brennkammer austretende heiße Gas wird einer Turbine zugeleitet. Die Turbine kann zum Antreiben eines Generators dienen. Der Verdichter enthält einen drehbar gelagerten Rotor, an dem Laufschaufeln befestigt sind. Des Weiteren enthält der Verdichter einen Stator, an dem feststehende Leitschaufeln befestigt sind. Dabei sind die Lauf- und Leitschaufeln, bezogen auf die Drehachse des Verdichters, einander abwechselnd angeordnet. Aus der DE 101 22 695 A1 ist eine solche Anordnung bekannt.

Zum Kühlen der Luft innerhalb des Verdichters kann, insbesondere an heißen Tagen, Wasser in einen Lufteinlass des Verdichters eingespritzt werden. Dadurch kann die Effizienz und Leistung des Verdichters gesteigert werden. Dieses Verfahren wird auch "wet compression" Verfahren genannt. Durch das Anwenden dieses Verfahrens werden Teile des Verdichters während des Einschaltvorgangs starken heiß-kalt Temperaturwechseln ausgesetzt. Dies führt zu mechanischen Spannungen in diesen Teilen, insbesondere in den hinteren Laufschaufeln und den Radscheiben des Verdichters.

Des Weiteren ist aus der Offenlegungsschrift DE 44 11 616 A1 ein Verfahren zum Betreiben einer Strömungsmaschine bekannt. Bei diesem Verfahren wird in den Rotor, welcher aus mehreren zusammengeschweißten Wellenteilen besteht, ein Konditionierungsmedium geleitet, welches die sich in den transienten Betriebszuständen zwischen Stator und Rotor einstellende Temperaturdifferenz zur Radialspaltminimierung auszugleichen vermag.

Der vorliegenden Erfindung liegt die Aufgabe zugrunde, einen verbesserten Betrieb eines Verdichters zu ermöglichen.

Diese Aufgabe ist durch die technische Lehre des Anspruchs 1, 10 oder 12 gelöst.

Erfindungsgemäß wird einem nabenseitigen Befestigungsbereich der Laufschaufeln Heißluft zugeführt. Der erfindungsgemäße Verdichter weist dazu eine oder mehrere Zuführeinrichtungen zum Zuführen von Heißluft zu dem Befestigungsbereich auf, die zumindest einen Ausgang umfassen, mittels dem die Heißluft gezielt auf die Befestigungsbereiche sprühbar ist. Dadurch kann der Befestigungsbereich der Laufschaufeln vorteilhafterweise vor den negativen Auswirkungen des Einsatzes des "wet compression" Verfahrens geschützt werden. Der durch die Heißluft, insbesondere kontinuierlich, erwärmte Befestigungsbereich wird durch das Wasser des "wet compression" Verfahrens nicht in nachteiliger Weise abgekühlt. Mechanische Spannungen aufgrund von heiß-kalt Temperaturwechsel im Befestigungsbereich werden verhindert. Es ist vorteilhafterweise nicht notwendig die Betriebsstunden des Verdichters und der Turbinenanlage, in der der Verdichter eingesetzt ist, zu reduzieren, um aufgrund des heiß-kalt Temperaturwechsels eventuell auftretenden, erhöhten Alterungserscheinungen des Materials des Befestigungsbereichs zu begegnen. Der Befestigungsbereich kann vor allem eine Klaue der Radscheibe sein, wobei diese Klaue zum Befestigen der Laufschaufel dient.

In einer vorteilhaften Ausgestaltung der Erfindung ist ein Stator vorhanden, an dem Leitschaufeln befestigt sind. Die Laufschaufeln sind dabei zu den Leitschaufeln, bezogen auf eine Drehachse des Verdichters, axial versetzt angeordnet. Ferner sind die eine oder mehreren Zuführeinrichtungen in den Leitschaufeln ausgebildet. Dies ermöglicht ein besonders kompaktes Ausbilden der einen oder mehreren Zuführeinrichtungen und ein effizientes Zuführen der Heißluft zu dem Befestigungsbereich.

Besonders bevorzugt ist in den Leitschaufeln eine Anzahl von, bezogen auf die Drehachse des Verdichters, radialen Bohrungen zum Zuführen der Heißluft vorhanden. Eine solche Bohrung ist einfach und kompakt in der Leitschaufel auszubilden und gewährleistet ein zuverlässiges Transportieren und Zuführen der Heißluft.

In einer weiteren, besonders vorteilhaften Ausgestaltung ist am nabenseitigen Ende der Leitschaufeln ein Statorring vorhanden und die eine oder mehreren Zuführeinrichtung in dem Statorring ausgebildet. Der Statorring ermöglicht es auf einfache Weise, die durch die Leitschaufeln geführte Heißluft zielgerichtet zu dem Befestigungsbereich zu leiten. Insbesondere auch deshalb, da der Statorring an den im Betrieb umlaufenden Befestigungsbereich angrenzt.

Vorteilhafterweise ist in dem Statorring eine erste axiale Bohrung zum Zuführen der Heißluft vorhanden. Eine solche Bohrung ist einfach in dem Statorring auszubilden und gewährleistet ein zuverlässiges Transportieren und Zuführen der Heißluft. Insbesondere lässt sich eine solche Bohrung einfach mit der in der Leitschaufel befindlichen Bohrung verbinden.

In einer vorteilhaften Ausgestaltung sind die eine oder mehreren Zuführeinrichtungen so ausgestaltet, dass sie ebenfalls einen nabenseitigen Befestigungsbereich einer stromauf angeordneten Laufschaufel mit Heißluft versorgen. Auf diese Weise können zwei Befestigungsbereiche von zwei Laufschaufeln mit einer einzigen Zuführeinrichtung mit Heißluft versorgt werden. Dies ist kostengünstig und einfach zu realisieren und besonders kompakt im Verdichter anzuordnen.

Besonders bevorzugt ist in dem Statorring eine zweite axiale Bohrung zum Zuführen der Heißluft zu dem Befestigungsbereich der stromauf angeordneten Laufschaufel vorhanden. Eine solche Bohrung ist einfach und kompakt in dem Statorring auszubilden und gewährleistet ein zuverlässiges Transportieren und Zuführen der Heißluft zu dem Befestigungsbereich der stromauf angeordneten Laufschaufel. Insbesondere lässt sich eine solche Bohrung einfach mit der in einer der Leitschaufeln befindlichen Bohrung und der ersten Bohrung des Statorrings verbinden.

In einer weiteren vorteilhaften Ausgestaltung weisen die radialen und die axialen Bohrungen unterschiedliche Durchmesser auf. Dadurch lassen sich unterschiedliche Mengen von Heißluft zu den Befestigungsbereichen leiten. Insbesondere können die radialen Bohrungen größere Durchmesser haben, als die axialen Bohrungen, da die durch die radialen Bohrungen transportierte Heißluft auf die beiden axialen Bohrungen verteilt wird. Die radialen Bohrungen können damit eine größere Menge von Heißluft leiten.

Vorteilhafterweise weisen die eine oder mehreren Zuführeinrichtungen wenigstens ein Ventil zum Steuern der Zufuhr von Heißluft auf. Mit dem wenigstens einen Ventil lässt sich die Menge und die Zeit, in der Heißluft zugeführt wird, besonders einfach einstellen und steuern.

In einer vorteilhaften Ausgestaltung der erfindungsgemäßen Turbinenanlage ist diese so ausgestaltet, dass sie aus dem Verdichter ausgegebene Luft der einen oder den mehreren Zuführeinrichtungen des Verdichters als Heißluft zuführt. Dadurch kann in der Turbinenanlage bereits vorhandene Heißluft einfachheitshalber der einen oder den mehreren Zuführeinrichtungen zugeleitet werden. Durch das Verdichten von Luft in dem Verdichter wird diese Luft erwärmt und als Heißluft aus dem Verdichter ausgegeben. Die ausgegebene Heißluft kann dann einer Verbrennungskammer der Turbinenanlage zugeleitet werden. Vorteilhafterweise kann von dieser Heißluft ein geringer Prozentsatz für das Zuleiten zu dem Verdichter abgezweigt werden.

Nachfolgend werden die Erfindung und ihre Vorteile anhand eines Ausführungsbeispiels und der beigefügten Zeichnung näher erläutert. Es zeigen:
- Fig. 1: ein Ausführungsbeispiel einer erfindungsgemäßen Turbinenanlage mit einem erfindungsgemäßen Verdichter,
- Fig. 2: einen vergrößerten Ausschnitt eines Teils des erfindungsgemäßen Verdichters der Turbinenanlage nach Fig. 1 mit einer zweiseitigen, axialen Zuführung von Heißluft,
- Fig. 3: einen vergrößerten Ausschnitt eines Teils eines weiteren Ausführungsbeispiels eines erfindungsgemäßen Verdichters mit einer einseitigen, axialen Zuführung von Heißluft,
- Fig. 4: eine schematische, teilweise geschnittene Darstellung einer Draufsicht auf eine Statorring und
- Fig. 5: ein weiteres Ausführungsbeispiel der erfindungsgemäßen Turbinenanlage mit einer erweiterbaren Zuführeinrichtung zum Zuführen von Heißluft.

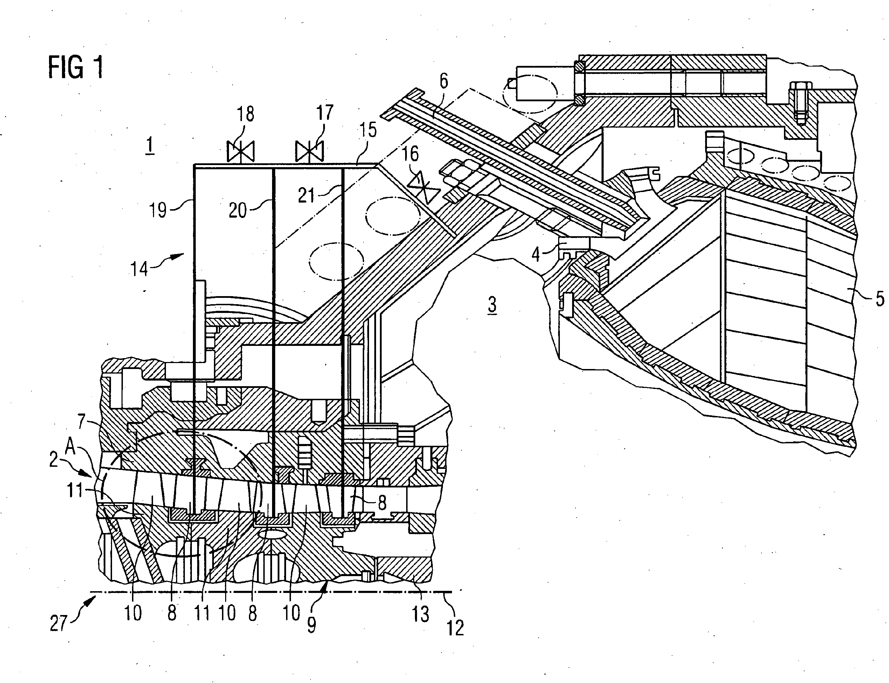

Fig. 1 zeigt ein Ausführungsbeispiel einer erfindungsgemäßen Turbinenanlage 1. Die Turbinenanlage 1 ist hier eine stationäre Gasturbinenanlage, die in einem Gasturbinenkraftwerk eingesetzt wird. Die Turbinenanlage 1 enthält einen erfindungsgemäßen Verdichter 2 zum Verdichten von ihm zugeführter Frischluft und einen Verbindungsraum 3 zwischen dem Ausgang des Verdichters 2 und einem Lufteinlass 4 einer Brennkammer 5. Über den Verbindungsraum 3 wird von dem Verdichter 2 ausgegebene, verdichtete Heißluft zu der Brennkammer 5 geleitet. Die Heißluft kann über den Lufteinlass 4 zum Verbrennen eines Brennstoffs in die Brennkammer 5 einströmen. Die Turbinenanlage 1 enthält dazu einen Brenner und eine Einspritzdüse 6 für den Brennstoff. Nach dem Verbrennen wird das erhitzte Verbrennungsgas einer (nicht dargestellten) Turbine zugeleitet.

Der Verdichter 2 enthält einen Stator 7, an dem mehrere Leitschaufeln 8 befestigt sind. Der Verdichter 2 weist ferner einen Rotor 27 mit Radscheiben 9 auf, an denen Laufschaufeln 10 befestigt sind. Die Radscheiben 9 enthalten dazu klauenförmig ausgestaltete Befestigungsbereiche 11, in denen die Laufschaufeln 10 an den Radscheiben 9 befestigt sind. Die Radscheiben 9 sind auf einer Welle drehbar gelagert. Die Welle stellt eine Drehachse 12 des Verdichters 2 dar. Zum Befestigen der Radscheiben 9 auf der Welle enthält der Verdichter 2 eine Nabe 13. Ein entlang der Drehachse 12 axial aufeinanderfolgend angeordnetes Paar aus einem Kranz von Leitschaufeln 8 und einem Kranz von Laufschaufeln 10 wird als eine Stufe des Verdichters 2 bezeichnet. Der Verdichter 2 enthält mehrere, bezogen auf seine Drehachse 12, axial nebeneinander angeordnete Stufen. Im Ausführungsbeispiel nach Fig. 1 sind drei nebeneinander angeordnete Stufen des Verdichters 2 dargestellt.

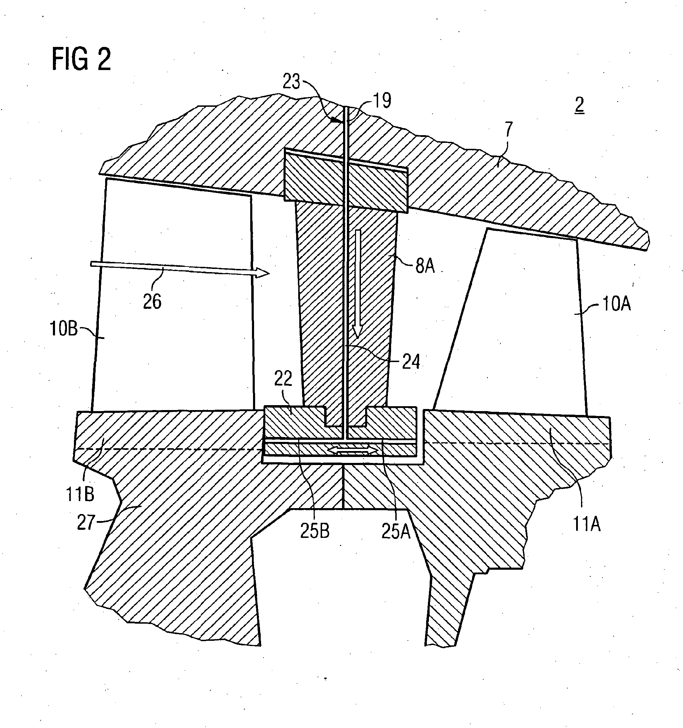

Erfindungsgemäß enthalten der Verdichter 2 und die Turbinenanlage 1 eine Zuführeinrichtung 14 zum Zuführen von Heißluft zu den Befestigungsbereichen 11 der Laufschaufeln 10. Dazu zweigt aus dem Verbindungsraum 3 vor dem Lufteinlass 4 ein Rohrsystem 15 ab, das Teil der Zuführeinrichtung 14 ist und einen geringen Teil der in dem Verbindungsraum 3 vorhandenen Heißluft zu dem Verdichter 2 zurückführt. In das Rohrsystem 15 sind mehrere Ventile 16, 17 und 18 zwischengeschaltet, mit denen sich jeweils die Menge und die zeitliche Dauer des Zuführens von Heißluft steuern lässt. Das Rohrsystem 15 verzweigt in drei Rohrsystemäste 19, 20 und 21, die in drei Leitschaufeln 8 des Verdichters 2 münden. In der Fig. 1 ist eine ellipsenförmige Markierung A eingezeichnet, die einen Bereich des Verdichters 2 markiert, der in der Fig. 2 in einer vergrößerten Darstellung gezeigt ist und im Folgenden beschrieben wird.

Fig. 2 zeigt beispielhaft einen in Fig. 1 mit der Markierung A gekennzeichneten Teil des erfindungsgemäßen Verdichters 2 der Turbinenanlage 1. In der Fig. 2 sind eine Leitschaufel 8A der Leitschaufeln 8 und zwei Laufschaufeln 10A und 10B der Laufschaufeln 10 des Verdichters 2 dargestellt. Die erste Laufschaufel 10A ist, bezogen auf die Drehachse 12 des Verdichters 2, axial rechts und die zweite Laufschaufel 10B axial links der Leitschaufel 8A angeordnet. Die Leitschaufel 8A ist an dem Stator 7, die erste Laufschaufel 10A an einem Befestigungsbereich 11A einer der Radscheiben und die zweite Laufschaufel 10B an einem Befestigungsbereich 11B einer der Radscheiben befestigt. Die Befestigungsbereiche 11A und 11B sind klauenförmig ausgestaltet und werden auch als Radscheibenklauen bezeichnet. Zwischen den beiden Befestigungsbereichen 11A, 11B befindet sich nabenseitig ein Statorring 22, in dem der Kopf der Leitschaufel 8A angeordnet ist. Der Statorring 22 dient zum Abdichten der Nabe 13.

In der Fig. 2 ist die Zuführeinrichtung 15 genauer dargestellt, indem sie die Einmündung des Rohrsystemastes 19 in die Leitschaufel 8A zeigt. Dazu ist in dem Stator 7 ein Durchgang 23 vorhanden, durch den der Rohrsystemast 19 verläuft. In die Leitschaufel 8A ist eine Bohrung 24, bezogen auf die Drehachse 12, radial eingebracht. Die Bohrung 24 verläuft durch die gesamte Leitschaufel 8A bis zu deren Fuß und mündet dann in den Statorring 22. In dem Statorring 22 ist eine erste Bohrung 25A ausgebildet, die von der Mündung der radialen Bohrung 24, bezogen auf die Drehachse 12, axial in Richtung des Befestigungsbereichs 11A verläuft. In dem Statorring 22 ist ferner eine zweite Bohrung 25B ausgebildet, die von der Mündung der radialen Bohrung 24, bezogen auf die Drehachse 12, axial in Richtung des Befestigungsbereichs 11B verläuft. Die erste Bohrung 25A und die zweite Bohrung 25B können als eine durchgehende Bohrung realisiert sein. Die Ausgänge der beiden Bohrungen 25A und 25B treffen auf Randflächen der Befestigungsbereiche 11A bzw. 11B. Die Durchmesser der Bohrungen 24, 25A und 25B können unterschiedlich groß sein. Insbesondere kann der Durchmesser der radialen Bohrung 24 größer sein, als die Durchmesser der axialen Bohrungen 25A, 25B. Die Fig. 2 zeigt, angedeutet durch einen Pfeil 26, die Zufuhr kühler Frischluft durch die Leitschaufeln 8 und Laufschaufeln 10 des Verdichters 2.

Durch die Zuführeinrichtung 14 mit dem Rohrsystem 15 wird Heißluft aus dem Verbindungsraum 3 abgezweigt, in die Rohrsystemäste 19, 20, 21 und dann in die Leitschaufeln 8 eingeleitet. Im Folgenden wird nur das Zuführen von Heißluft in den Rohrsystemast 19 beschrieben. Das Zuführen von Heißluft über die Rohrsystemäste 20, 21 erfolgt analog. Die von dem Rohrsystemast 19 transportierte Heißluft wird in die radiale Bohrung 24 der Leitschaufel 8A eingespeist und von dieser zu dem Statorring 22 weitergeleitet. Dort verteilt sich die Heißluft auf die beiden axialen Bohrungen 25A, 25B. Eine einzige radiale Bohrung speist somit zwei axiale Bohrungen. Über die axialen Bohrungen 25A, 25B wird die Heißluft den beiden Befestigungsbereichen 11A, 11B zuführt. Die Heißluft wird dann aus den Ausgängen der Bohrungen 25A, 25B gezielt auf die benachbarten Befestigungsbereiche 25A, 25B gesprüht. Dadurch erwärmt die Heißluft die Befestigungsbereiche 25A, 25B. Die Materialien der Befestigungsbereiche 25A, 25B unterliegen somit keinen problematischen Temperaturschwankungen durch die Anwendung des "wet compression" Verfahrens. Mechanische Spannungen aufgrund von Temperaturschwankungen werden somit vermieden.

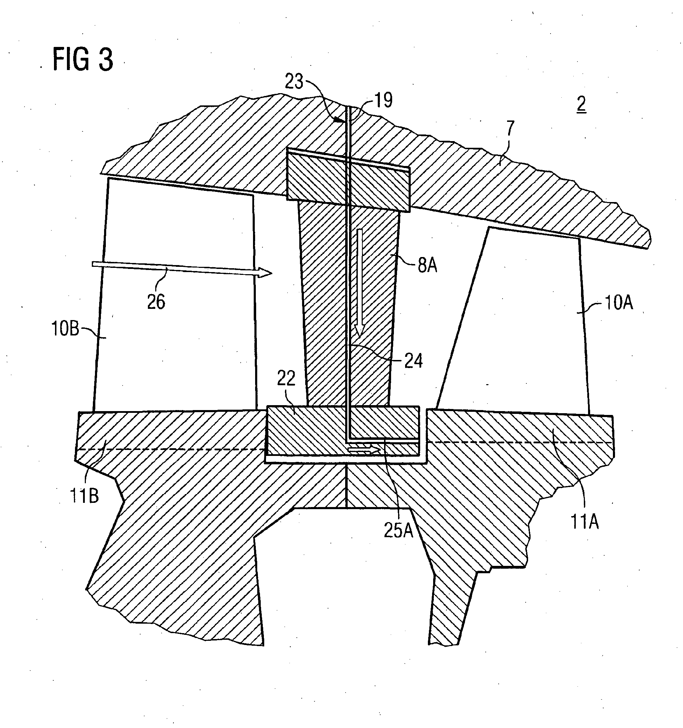

Fig. 3 zeigt einen vergrößerten Ausschnitt eines Teils eines weiteren Ausführungsbeispiels eines erfindungsgemäßen Verdichters 2. Der Aufbau des Verdichters 2 gemäß dem vorliegenden Ausführungsbeispiel nach Fig. 3 entspricht weitgehend dem Verdichter 2 gemäß dem vorhergehenden Ausführungsbeispiel nach Fig. 2. Im Gegensatz zum vorhergehenden Ausführungsbeispiel enthält der Verdichter 2 hier allerdings eine nur einseitige, axiale Zuführung von Heißluft zu dem nabenseitigen Befestigungsbereich 11A. In dem Statorring 22 ist nur die erste Bohrung 25A ausgebildet, die von der Mündung der radialen Bohrung 24, bezogen auf die Drehachse 12, in Richtung des Befestigungsbereichs 11A verläuft. Die zweite Bohrung 25B ist in dem Statorring 22 im vorliegenden Ausführungsbeispiel nicht ausgebildet.

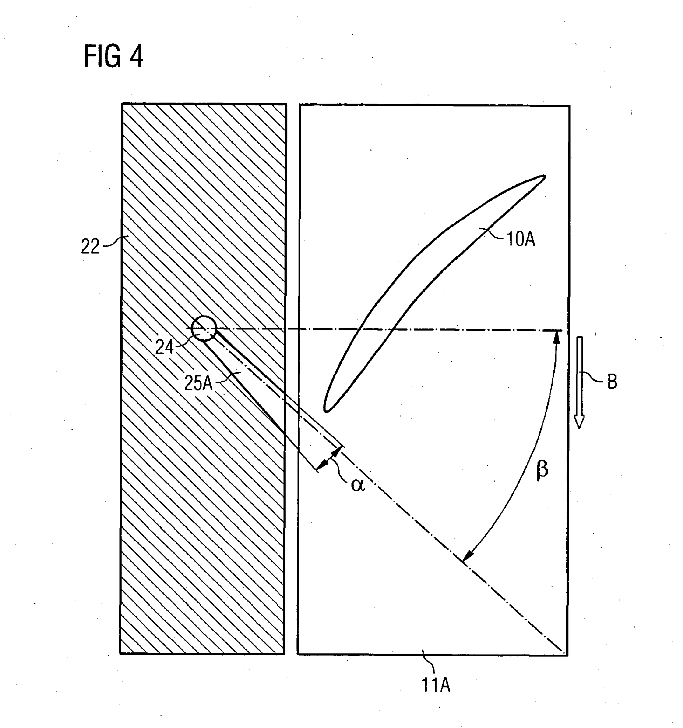

Fig. 4 zeigt eine schematische, teilweise geschnittene Darstellung einer Draufsicht auf den Statorring 22. Zu sehen ist die durch die Leitschaufel 8A verlaufende, in den Statorring 22 mündende radiale Bohrung 24. Ausgehend von dieser Bohrung 24 verläuft die Bohrung 25A in Richtung des Befestigungsbereichs 11A, an dem die Laufschaufel 10A befestigt ist. Die Bohrung 25A weist einen Bohrungsaustrittswinkel α auf, der in einer alternativen Ausführung auch einen Wert von null haben kann. Die Bohrung 25A hat ferner einen Bohrungswinkel β, der in einer alternativen Ausführung ebenfalls einen Wert von null haben kann. In diesem Fall kann die Bohrung 25A axial verlaufen. Die Fig. 4 zeigt ferner eine Drehrichtung B des Befestigungsbereichs 11A und der zugeordneten Radscheibe 9.

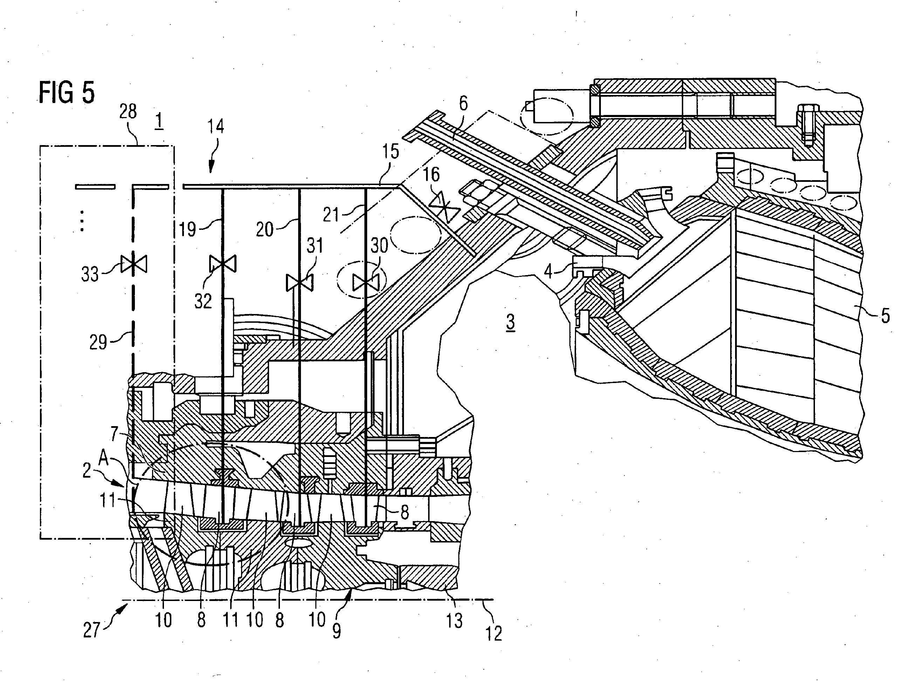

Fig. 5 zeigt ein weiteres Ausführungsbeispiel der erfindungsgemäßen Turbinenanlage 1. Der Aufbau der Turbinenanlage 1 gemäß dem vorliegenden Ausführungsbeispiel nach Fig. 5 entspricht weitgehend der Turbinenanlage 1 gemäß dem vorherigen Ausführungsbeispiel nach Fig. 1. Im Gegensatz zum vorhergehenden Ausführungsbeispiel enthält die Turbinenanlage 1 hier eine erweiterbare Zuführeinrichtung 14 zum Zuführen von Heißluft zu Befestigungsbereichen 11 für Laufschaufeln 10. Die Zuführeinrichtung 14 enthält hier einen strich-punktiert dargestellten Erweiterungsbereich 28, in dem weitere Module mit Rohrsystemästen 29 vorgesehen werden können. Diese weiteren Module mit Rohrsystemästen 29 sind dann zu weiteren Befestigungsbereichen 10 zum Befestigen von weiteren Laufschaufeln 10 des Verdichters 2 geführt. Das Rohrsystem 15 verzweigt wieder in die drei Rohrsystemäste 19, 20 und 21, die in drei Leitschaufeln 8 des Verdichters 2 münden. Zusätzlich verzweigt das Rohrsystem 15 in den Rohrsystemast 29. In das Rohrsystem 15 gemäß dem vorliegenden Ausführungsbeispiel sind mehrere Ventile 16, 30, 31, 32 und 33 zwischengeschaltet, mit denen sich jeweils die Menge und die zeitliche Dauer des Zuführens von Heißluft steuern lässt. Das Ventil 16 ist, wie zuvor im Ausführungsbeispiel nach Fig. 1, am Einlass des Rohrsystems 15 am Verbrennungsraum 3 angeordnet. Das Ventil 30 ist nun im Rohrsystemast 21, das Ventil 31 im Rohrsystemast 20, das Ventil 32 im Rohrsystemast 19 und das Ventil 33 im Rohrsystemast 29 angeordnet.

## Patentansprüche

1. Verdichter (2) mit einem Rotor (27), der eine Pluralität von Radscheiben (9) aufweist, an denen Laufschaufeln (10, 10A, 10B) befestigt sind, und einer Nabe (13),
**dadurch gekennzeichnet, dass**
eine oder mehrere Zuführeinrichtungen (14) zum Zuführen von Heißluft zu einem nabenseitigen Befestigungsbereich.(11, 11A, 11B) der Laufschaufeln (10, 10A) vorhanden sind, die zumindest einen Ausgang umfassen, mittels dem die Heißluft gezielt auf die Befestigungsbereiche (11, 11A, 11B) sprühbar ist.

2. Verdichter (2) nach Anspruch 1,
**dadurch gekennzeichnet, dass**
ein Stator (7) vorhanden ist, an dem Leitschaufeln (8, 8A) befestigt sind, wobei die Laufschaufeln (10, 10A, 10B) zu den Leitschaufeln (8, 8A), bezogen auf eine Drehachse (12) des Verdichters (2), axial versetzt angeordnet und
dass eine oder die mehreren Zuführeinrichtungen (14) in der Leitschaufel (8, 8A) ausgebildet sind.

3. Verdichter (2) nach Anspruch 2,
**dadurch gekennzeichnet, dass**
in den Leitschaufeln (8, 8A) eine Anzahl von, bezogen auf die Drehachse (12) des Verdichters (2), radialen Bohrungen (24) zum Zuführen der Heißluft vorhanden sind.

4. Verdichter (2) nach Anspruch 2 oder 3,
**dadurch gekennzeichnet, dass**
am nabenseitigen Ende der Leitschaufeln (8, 8A) ein Statorring (22) vorhanden und die eine oder mehreren Zuführeinrichtungen (14) in dem Statorring (22) ausgebildet sind.

5. Verdichter (2) nach Anspruch 4,
**dadurch gekennzeichnet, dass**
in dem Statorring (22) eine erste axiale Bohrung (25A) zum Zuführen der Heißluft vorhanden ist.

6. Verdichter nach einem der vorhergehenden Ansprüche,
**dadurch gekennzeichnet, dass**
die eine oder mehreren Zuführeinrichtungen (14) so ausgestaltet sind, dass sie ebenfalls einen nabenseitigen Befestigungsbereich (11, 11B) einer stromauf angeordneten Laufschaufel (10, 10B) mit Heißluft versorgen.

7. Verdichter (2) nach Anspruch 5 und 6,
**dadurch gekennzeichnet, dass**
in dem Statorring (22) eine zweite axiale Bohrung (25B) zum Zuführen der Heißluft zu dem Befestigungsbereich (11, 11B) der stromauf angeordneten Laufschaufel (10, 10B) vorhanden ist.

8. Verdichter (2) nach einem der Ansprüche 5 bis 7,
**dadurch gekennzeichnet, dass**
die radialen Bohrungen (24) und die axialen Bohrungen (25A, 25B) unterschiedliche Durchmesser aufweisen.

9. Verdichter (2) nach einem der vorhergehenden Ansprüche,
**dadurch gekennzeichnet, dass**
die eine oder mehreren Zuführeinrichtung (14) wenigstens ein Ventil (16, 17, 18, 30, 31, 32, 33) zum Steuern der Zufuhr von Heißluft aufweisen.

10. Turbinenanlage (1) mit einem Verdichter (2) nach einem der vorhergehenden Ansprüche.

11. Turbinenanlage (1) nach Anspruch 10,
**dadurch gekennzeichnet, dass**
sie so ausgestaltet ist, dass sie aus dem Verdichter (2) ausgegebene Luft der einen oder den mehreren Zuführeinrichtungen (14) des Verdichters (2) als Heißluft zuführt.

12. Verfahren zum Betrieb eines Verdichters,
bei dem während des "wet compression" -Betriebs Heißluft zu einem nabenseitigen Befestigungsbereich (11, 11A, 11B) einer an einer Radscheibe (9) befestigten Laufschaufel (10, 10A, 10B) des Verdichters (2), der einen Rotor (27) zum Anordnen von Radscheiben (9) auf einer Welle aufweist, zugeführt wird.

## Claims

1. Compressor (2) having a rotor (27) which has a plurality of rotor discs (9) to which rotor blades (10, 10A, 10B) are attached, and a hub (13),
**characterized in that**
one or more supply devices (14) for supplying hot air to a hub-side attachment region (11, 11A, 11B) of the rotor blades (10, 10A) are present and comprise at least one outlet by means of which the hot air can be projected onto the attachment regions (11, 11A, 11B) in a targeted manner.

2. Compressor (2) according to Claim 1, **characterized in that**
a stator (7) is present, guide vanes (8, 8A) being attached thereon, wherein the rotor blades (10, 10A, 10B) are arranged axially offset to the guide vanes (8, 8A), with respect to an axis of rotation (12) of the compressor (2), and
**in that** the one or more of the supply devices (14) are formed in the guide vane (8, 8A).

3. Compressor (2) according to Claim 2, **characterized in that**
a number of bores (24), which are radial with respect to the axis of rotation (12) of the compressor (2), for supplying the hot air are present in the guide vanes (8, 8A).

4. Compressor (2) according to Claim 2 or 3, **characterized in that**
a stator ring (22) is present on the hub-side end of the guide vanes (8, 8A) and the one or more supply devices (14) are formed in the stator ring (22).

5. Compressor (2) according to Claim 4, **characterized in that**
a first axial bore (25A) for supplying the hot air is present in the stator ring (22).

6. Compressor according to one of the preceding claims,
**characterized in that**
the one or more supply devices (14) are configured such that they also supply hot air to a hub-side attachment region (11, 11B) of a rotor blade (10, 10B) arranged upstream.

7. Compressor (2) according to Claims 5 and 6, **characterized in that**
a second axial bore (25B), for supplying the hot air to the attachment region (11, 11B) of the rotor blade (10, 10B) arranged upstream, is present in the stator ring (22) .

8. Compressor (2) according to one of Claims 5 to 7, **characterized in that**
the radial bores (24) and the axial bores (25A, 25B) have different diameters.

9. Compressor (2) according to one of the preceding claims,
**characterized in that**
the one or more supply devices (14) have at least one valve (16, 17, 18, 30, 31, 32, 33) for controlling the supply of hot air.

10. Turbine installation (1) having a compressor (2) according to one of the preceding claims.

11. Turbine installation (1) according to Claim 10,
**characterized in that**
it is configured such that it supplies air expelled from the compressor (2) as hot air to the one or more supply devices (14) of the compressor (2).

12. Method for operating a compressor,
in which, during "wet compression" operation, hot air is supplied to a hub-side attachment region (11, 11A, 11B) of a rotor blade (10, 10A, 10B) of the compressor (2), which blade is attached to a rotor disc (9), the compressor having a rotor (27) for arranging rotor discs (9) on a shaft.

## Revendications

1. Compresseur ( 2 ) ayant un rotor ( 27 ), qui a une pluralité de disques ( 9 ) de roue, auxquels sont fixées des aubes ( 10, 10A, 10B ) mobiles, et un moyeu ( 13 ),
**caractérisé en ce que**
il y a un ou plusieurs dispositifs ( 14 ) d'apport pour l'apport d'air chaud à une zone ( 11, 11A, 11B ) de fixation du côté du moyeu des aubes ( 10, 10A ) mobiles, qui comprennent au moins une sortie, au moyen de laquelle l'air chaud peut être pulvérisé d'une manière ciblée sur les zones ( 11, 11A, 11B ) de fixation.

2. Compresseur ( 2 ) suivant la revendication 1,
**caractérisé en ce que**
il y a un stator ( 7 ), auquel des aubes ( 8, 8A ) directrices sont fixées, les aubes ( 10, 10A, 10B ) mobiles étant, par rapport aux aubes ( 8, 8A ) directrices, décalées axialement sur un axe ( 12 ) de rotation du compresseur ( 2 ) et **en ce que** le un ou les plusieurs dispositifs ( 14 ) d'apport sont constitués dans les aubes ( 8, 8A ) directrices.

3. Compresseur ( 2 ) suivant la revendication 2,
**caractérisé en ce que**
il y a, dans les aubes ( 8, 8A ) directrices, un certain nombre de trous ( 24 ) radiaux rapportés à l'axe ( 12 ) de rotation du compresseur ( 2 ) pour l'apport de l'air chaud.

4. Compresseur ( 2 ) suivant la revendication 2 ou 3,
**caractérisé en ce que**
à l'extrémité du côté du moyeu des aubes ( 8, 8A ) directrices, il y a un anneau ( 22 ) statorique et le un ou les plusieurs dispositifs ( 14 ) d'apport sont constitués dans l'anneau ( 22 ) statorique.

5. Compresseur ( 2 ) suivant la revendication 4,
**caractérisé en ce que**
il y a, dans l'anneau ( 22 ) statorique, un premier trou ( 25A ) axial pour l'apport de l'air chaud.

6. Compresseur ( 2 ) suivant l'une des revendications précédentes,
**caractérisé en ce que**
le ou les plusieurs dispositifs ( 14 ) d'apport sont conformés de manière à alimenter en air chaud également une zone ( 11, 11B ) de fixation du côté du moyeu d'une aube ( 10, 10B ) mobile montée en amont.

7. Compresseur ( 2 ) suivant les revendications 5 et 6,
**caractérisé en ce que**
il y a, dans l'anneau ( 22 ) statorique, un deuxième trou ( 25B ) axial d'apport de l'air chaud à la zone ( 11, 11B ) de fixation de l'aube ( 10, 10B ) mobile montée en amont.

8. Compresseur ( 2 ) suivant l'une des revendications 5 à 7,
**caractérisé en ce que**
les trous ( 24 ) radiaux et les trous ( 25A, 25B ) axiaux ont des diamètres différents.

9. Compresseur ( 2 ) suivant l'une des revendications précédentes,
**caractérisé en ce que**
le ou les plusieurs dispositifs ( 14 ) d'apport ont au moins un robinet ( 16, 17, 18, 30, 31, 32, 33 ) de commande de l'apport d'air chaud.

10. Installation ( 1 ) de turbine, comprenant un compresseur ( 2 ) suivant l'une des revendications précédentes.

11. Installation ( 1 ) de turbine suivant la revendication 10,
**caractérisée en ce que**
elle est conformée de manière à apporter comme air chaud de l'air cédé par le compresseur ( 2 ) au un ou aux plusieurs dispositifs ( 14 ) d'apport du compresseur ( 2 ).

12. Procédé pour faire fonctionner un compresseur,
dans lequel, pendant le fonctionnement en "wet compression", on apporte de l'air chaud à une zone ( 11, 11A, 11B ) de fixation, du côté du moyeu d'une aube ( 10, 10A, 10B ) mobile fixée à un disque ( 9 ) de roue du compresseur ( 2 ) , qui a un rotor ( 27 ) pour mettre des disques ( 9 ) de roue sur un arbre.
